# DEMANDE DE BREVET EUROPEEN

(11) **EP 1 056 177 A1**
(43) Date de publication de la demande: **29.11.2000**
(21) Numéro de dépôt: 00401318.1
(22) Date de dépôt: 15.05.2000
(51) Int. Cl.: H02G 9/10, H02B 7/08

(54) **Borne de branchement provisoire**

(30) Priorité: 28.05.1999 FR 9906779
(71) Demandeur: Alg-Fabae, 94360 Bry-Sur-Marne (FR)
(72) Inventeur: Andre, Jacques, 94270 Le Kremlin Bicetre (FR)
(74) Mandataire: Debay, Yves

(57) **Abrégé**

Borne de branchement provisoire caractérisée en ce qu'elle comprend un ensemble mobile (2) coulissant dans des moyens (10) de guidage fixe et enterré dans le sol (S), la borne comprend également des moyens de verrouillage autobloquants assurant le maintien de l'ensemble mobile (2), d'une part en position escamotée où la surface supérieure de l'ensemble mobile (2) affleure la surface du sol (S), et d'autre part en position déployée où l'ensemble mobile (1) fait saillie du sol (S).

## Description

La présente invention concerne une borne de branchement provisoire constituant un point de raccordement, par exemple au réseau de distribution de courant électrique ou d'eau.

Il est connu dans l'art antérieur que la distribution de courant ou d'eau, par exemple sur une place de marché, est malaisée puisqu'il n'existe en général que quelques points d'accès au réseau de distribution qui sont situés en périphérie de la place. Par conséquent, les exposants doivent tirer des câbles ou des canalisations jusqu'aux points d'accès ou bien s'installer à proximité de ces points d'accès pour pouvoir bénéficier de la distribution de courant ou d'eau.

La présente invention a donc pour objet de pallier les inconvénients de l'art antérieur en proposant une borne de branchement provisoire facile à mettre en place et facile d'accès.

Ce but est atteint par la borne de branchement provisoire selon la revendication 1.

Des développements supplémentaires de l'invention sont décrits dans les revendications 2 à 14.

D'autres particularités et avantages de la présente invention apparaîtront plus clairement à la lecture de la description ci-après faite en référence aux dessins annexés dans lesquels :
- la figure 1 représente une vue de face et partiellement en coupe d'une borne de branchement provisoire selon l'invention destinée à la distribution de courant en position déployée.
- la figure 2 représente une vue de côté d'une borne de branchement provisoire selon l'invention destinée à la distribution de courant en position déployée.
- la figure 3 représente une vue en perspective et partiellement en coupe d'une borne de branchement provisoire selon l'invention en position escamotée.
- la figure 4 représente une vue en perspective du châssis de la borne de branchement provisoire selon l'invention.

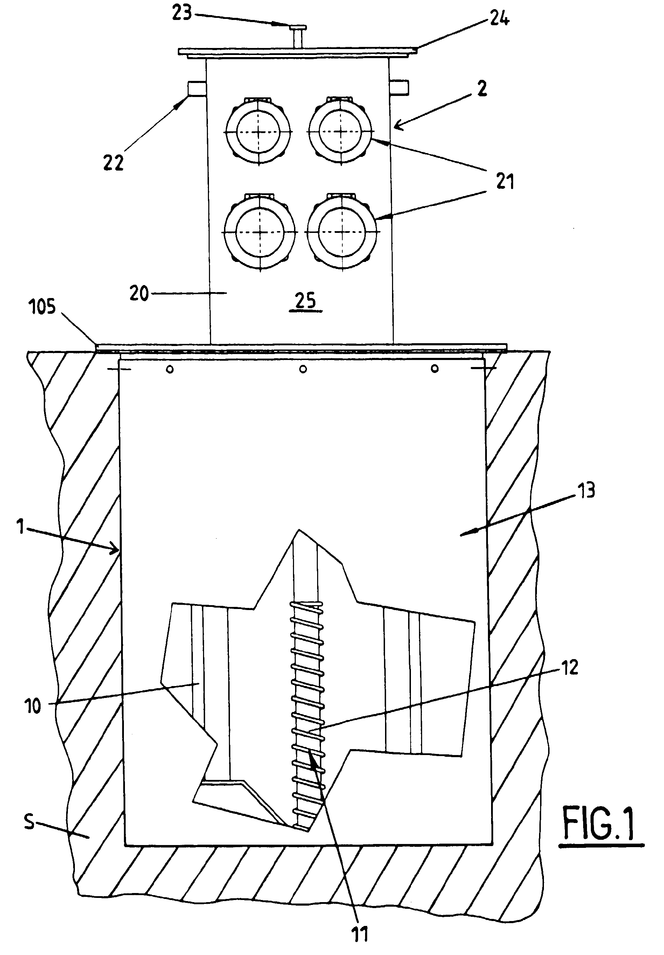

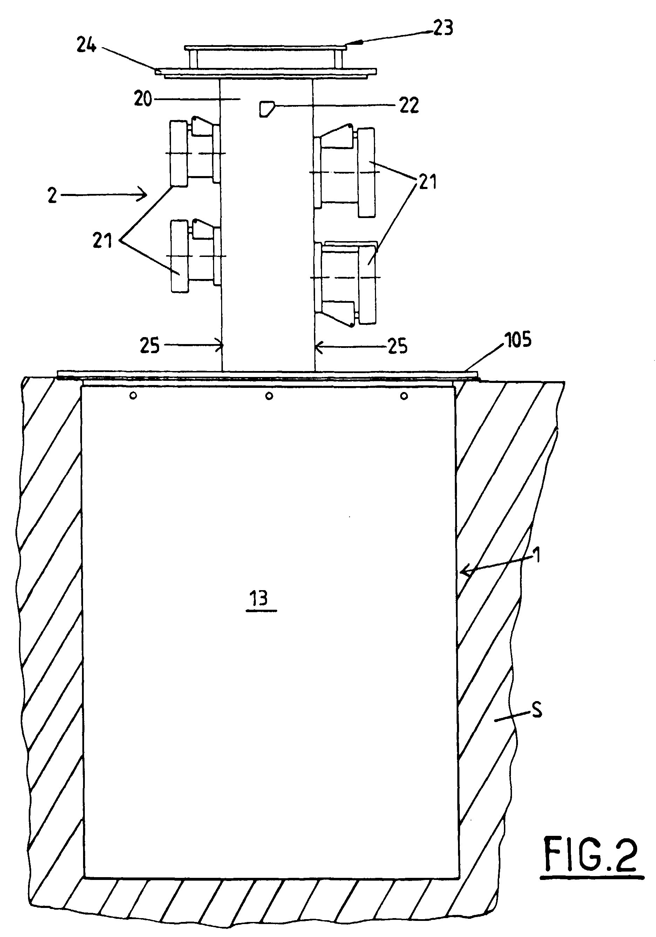

L'invention va être décrite en référence aux figures 1 et 2. La borne représentée sur les figures 1 et 2 est adaptée pour permettre la distribution de courant électrique. Cependant, il est possible d'envisager des applications différentes de la borne selon l'invention en réalisant des modifications simples explicitées ultérieurement afin que la borne puisse être utilisée pour la distribution de fluide, par exemple de l'eau, ou bien pour réaliser une connexion à un réseau informatique ou optique.

Avant d'entamer la description de l'invention, il convient d'expliciter le contexte dans lequel l'invention peut être utilisée. La présente invention est destinée à fournir un accès au réseau, par exemple, de distribution d'électricité et/ou d'eau, ou encore informatique ou optique, sur une place de marché ou une place de fête de plein air ou tout autre espace, par exemple, un hangar, un gymnase, où un besoin temporaire d'électricité ou d'eau est nécessaire.

Pour ce faire, l'invention comprend essentiellement deux parties, d'une part une partie fixe (1) comprenant un châssis (10) enterré dans le sol (S), par exemple dans un coffrage de béton et d'autre part un ensemble mobile (2) complètement escamotable dans la partie fixe (1). Lorsque l'ensemble mobile (2) est escamoté dans la partie fixe (1), la borne, selon l'invention, ne dépasse pas de la surface du sol (S).

L'ensemble mobile (2) comprend une boîte (20), par exemple parallélépipédique, comportant sur au moins une face (25) au moins une prise électrique (21). Les prises (21) électriques peuvent être remplacées par des raccords spécifiques pour la distribution de fluide tels que l'eau ou le gaz, ou encore par un branchement spécifique pour le raccordement à un réseau de fibre optique ou réseau de télécommunication. Hormis la variante de réalisation dans laquelle la borne est destinée à la distribution d'eau, la boîte est conformée pour être étanche. Dans la variante de réalisation représentée aux figures 1 et 2, les prises électriques (21) sont connectées au réseau de distribution électrique par l'intermédiaire de presses étoupes (non représentées) ou tous moyens de connexion équivalents qui permettent de conserver l'étanchéité de la boîte (20). Les prises (21) électriques sont choisies de façon à ce qu'elles soient également étanches afin d'assurer la sécurité des utilisateurs. Le coulissement de la boîte (20) dans la partie fixe (1) est assuré par des moyens de guidage décrits ultérieurement, conformés pour escamoter complètement la boîte dans la partie (1) fixe.

La partie supérieure de la boîte (20) comprend une plaque (24) sensiblement parallèle au sol (S). Cette plaque (24) est destinée à recevoir des moyens (23) de préhension, telle qu'une anse . L'anse (23) est montée sur la plaque (23) de façon à être escamotable. Afin de conserver l'étanchéité de la boîte (20) lorsque cela est nécessaire, les dimensions de la plaque (24) sont supérieures aux dimensions de la face de la boîte (20) sur laquelle la plaque (24) est fixée, et les points de fixation de l'anse (23) sur la plaque (24) ne sont pas situés en vis-à-vis de la face de la boîte (20) supportant la plaque (24). Par conséquent, aucun perçage n'est nécessaire sur la boîte (20) pour permettre l'escamotage de l'anse (23), ce qui permet de conserver l'étanchéité de la boîte.

Ainsi, même si la partie (1) fixe est susceptible d'être inondée lorsque la boîte (20) est escamotée dans la partie fixe (1), les branchements électriques des prises (21) restent toujours protégés de l'eau puisqu'ils sont montés dans la boîte (20) et que cette dernière est étanche.

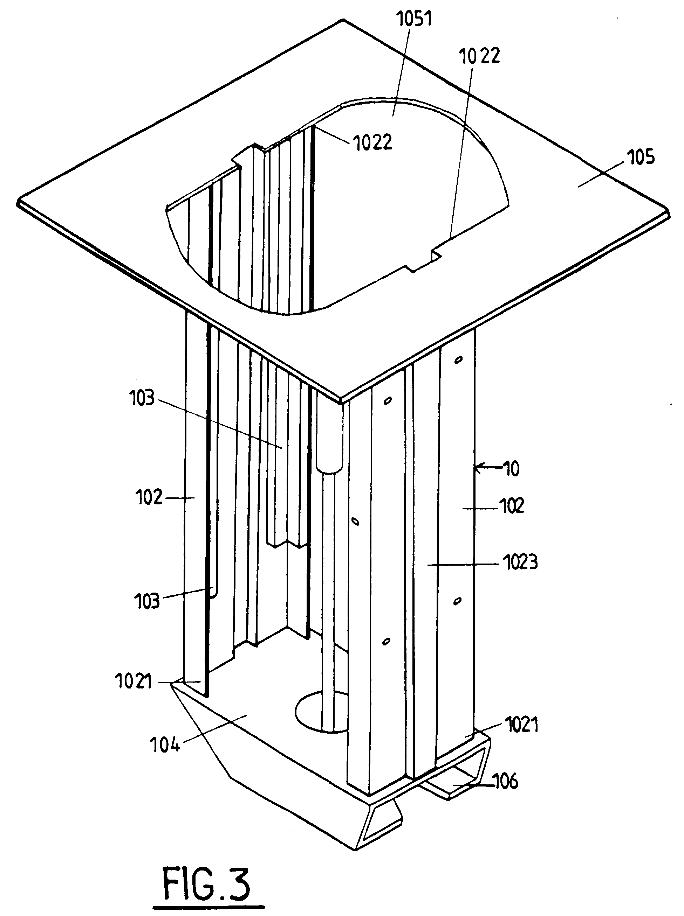

La partie fixe (1) comprend essentiellement un châssis (10) représenté figure 3. Le châssis (10) comprend des moyens de guidage constitués de deux profilés (101, 102) parallèles entre eux. Les profilés ont sensiblement une forme en U et sont montés en vis-à-vis l'un de l'autre de sorte que les extrémités libres du premier profilé soient en face des extrémités libres du deuxième profilé. Ainsi, les deux profilés (102) forment deux rails de guidage pour la boîte (20). Afin d'améliorer le coulissement de l'ensemble mobile sur les profilés, ceux-ci sont équipés de glissières (103). Chaque profilé (102) comprend deux glissières (103) constituées chacune d'un profilé sensiblement en forme de L et fixées dans les deux angles du U formant la section du profilé (102). Le matériau choisi pour réaliser les glissières (103) est un matériau possédant un faible coefficient de frottement et une bonne résistance aux conditions climatiques extérieures ainsi qu'une bonne tenue à l'humidité. En effet, comme expliqué précédemment, la borne selon l'invention est destinée à être installée, par exemple, sur des places de marché. Par conséquent, le châssis (10) est susceptible d'être exposé aux intempéries mais également aux eaux de ruissellement provenant des eaux de pluie ou bien du nettoyage de la place. Le matériau préféré est le polyéthylène haute densité.

Les deux profilés (102) peuvent être fixés, par leurs extrémités inférieures, à un fond (104) constitué d'une plaque de tôle pliée, et par leurs extrémités supérieures, à un couvercle (105) constitué d'une plaque. La plaque constituant le fond (104) est pliée de façon à former une gorge (106) en dessous des profilés (102). Cette gorge (106) est destinée à servir de moyens de drainage de la borne selon l'invention et également de rigidifier le châssis (10). En effet, comme expliqué précédemment, la partie fixe est installée dans un coffrage de béton enterré dans le sol. Ce coffrage comprend des moyens de drainage, généralement localisés dans le fond du coffrage, permettant d'évacuer les eaux de ruissellement. La gorge (106) permet de surélever les profilés (102) par rapport au fond du coffrage et donc de conserver l'efficacité du drainage du coffrage. De même, les profilés (102) peuvent comprendre des évidements de façon à favoriser la circulation des eaux de ruissellement jusqu'au fond du coffrage.

La plaque constituant le couvercle (105) comprend un perçage (1051) destiné au passage de l'ensemble mobile. Lorsque le châssis (10) est inséré dans le coffrage, le couvercle repose sur la surface du sol.

Comme représenté sur les figures 1, 2 et 4, la partie fixe (1) peut comprendre un caisson (1) permettant de contenir le châssis (10) et par exemple fixé au couvercle (105). Le caisson (13) simplifie les opérations de mise en place de la partie fixe dans le sol (S). En effet, il suffit de réaliser un coffrage en béton ou un trou de dimensions intérieures sensiblement identiques aux dimensions extérieures du caisson (13), puis d'insérer celui-ci dans le coffrage et de le fixer. Le caisson (13) comprend également dans la partie inférieure au moins un perçage (non représenté) pour permettre le drainage des eaux de ruissellement.

L'ensemble mobile (2) et le châssis (10) sont réalisés dans un matériau choisi pour conférer à la borne une résistance suffisante pour supporter, sans déformation, la charge produite par le passage d'un véhicule sur la borne, lorsque l'ensemble mobile (2) est escamoté dans le châssis (10).

La borne comprend également des moyens (11) élastiques sollicitant l'ensemble mobile pour l'amener en position déployée. Ces moyens élastiques (11) sont fixés d'une part sur la boîte (20) et d'autre part, soit sur le fond (104) du châssis, (10) soit sur le fond du coffrage en traversant le fond (104) du châssis (10). A titre d'exemple, comme représenté sur la figure 1, les moyens élastiques comprennent un ressort monté sur une tige (12) guide. Une autre variante de réalisation, représentée figure 3, consiste à remplacer le ressort (11) et la tige (12) par un vérin, par exemple à gaz. Les moyens élastiques doivent pouvoir supporter une immersion dans l'eau puisque la partie fixe est susceptible d'être inondée.

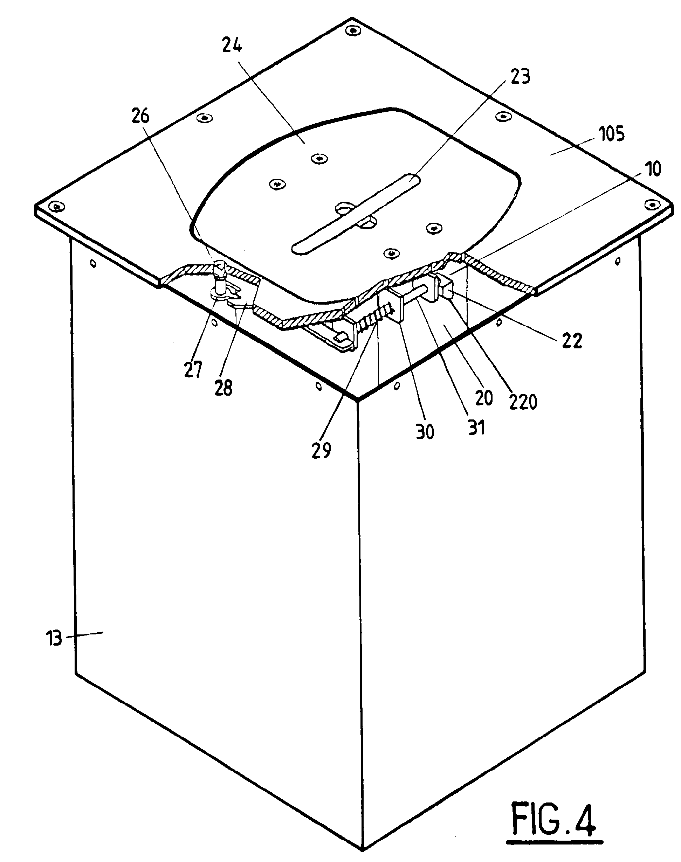

La borne, selon l'invention, comprend également des moyens de verrouillage autobloquants permettant de maintenir la boîte (20) en position escamotée et en position déployée. La figure 4 permet de distinguer ces moyens de verrouillage. La fonction principale des moyens de verrouillage est d'empêcher la translation de la boîte (20) lorsque les moyens de verrouillage sont en position de repos.

Les moyens de verrouillage comprennent, sur au moins une face verticale de la boîte (20), au moins une paire de doigts (22) alignés sur une droite verticale. Ces doigts (22) peuvent être saillants ou bien pénétrants dans la face de la boîte (20). A titre d'exemple, les figures 1, 2, et 4 représentent des variantes de réalisation dans lesquelles les doigts (22) sont saillants. Les moyens de verrouillage comprennent également un pêne (31) sollicité par des moyens de rappel (29) entre deux positions, une première position, dite de travail dans laquelle le pêne n'entrave pas la translation des doigts, et une deuxième position, dite de repos, dans laquelle soit le pêne bloque la translation du doigt supérieur dans le sens de déploiement de l'ensemble mobile, soit le pêne bloque la translation du doigt inférieur dans le sens d'escamotage. Dans la variante de réalisation représentée figure 4, le pêne (31) est constitué d'une tige qui coulisse au travers d'un perçage d'une patte (30) solidaire du couvercle (105) ou fixe par rapport à celui-ci. Une extrémité de la tige (31) est solidaire d'un bras (28) commandé en translation par une came (27) solidaire d'une serrure (26). Ainsi, la rotation de la serrure (26) dans un premier sens de rotation entraîne la rotation de la came (28). Cette rotation entraîne alors une translation de la tige (31) dont l'extrémité libre est destinée à entraver le mouvement des doigts (22). Les moyens de rappel comprennent un ressort (29), par exemple hélicoïdal, monté entre la patte fixe (30) et l'extrémité de la tige (31) lié au bras (28) de sorte qu'une de ces extrémités soit fixée sur la patte (30) fixe et que l'autre extrémité soit solidaire de la tige (31). En position de repos, c'est-à-dire lorsque la serrure n'est pas manoeuvrée, le ressort (29) sollicite le bras (28) pour amener la tige en position de blocage de la translation des doigts (22). Lorsque la serrure (26) est manoeuvrée dans le premier sens de rotation, le ressort est compressé contre la patte (26) fixe. Lorsque la serrure (26) est relâchée, le ressort(29) se détend, ce qui provoque le retour de la serrure (26) et de la tige dans leurs positions initiales. Afin d'éviter tous risques de détérioration, et pour des raisons de sécurité, la rotation de la serrure (26) peut être limitée au premier sens de rotation.

Ainsi, lorsque la boîte (20) est escamotée, la tige (31) est située au-dessus du doigt (22) situé le plus proche de la partie supérieure de la boîte (20), pour bloquer la translation vers l'extérieur de la boîte. Lorsque la boîte (20) est déployée, la tige (31) est située en dessous du doigt (non représenté) situé le plus proche de la partie inférieure de la boîte, pour empêcher la translation de la boîte (20) vers l'intérieur de la partie fixe (1). L'autoblocage des moyens de verrouillage est obtenu par l'intermédiaire d'un biseau (220) pratiqué sur chaque doigt (22). Ce biseau (220) est réalisé dans l'axe longitudinal du doigt (22) et orienté vers la tige (31). Le biseau (220) du doigt (22) supérieur est également orienté vers le fond de la partie fixe, et le biseau du doigt inférieur est également orienté vers le couvercle (105) de la partie fixe.

L'autoblocage fonctionne de la façon suivante. Lorsque la boîte est en position escamotée, l'opérateur manoeuvre la serrure pour permettre la translation de la boîte (20), puis l'opérateur relâche la serrure (26), ce qui provoque le retour de la tige (31) dans une position de verrouillage. Ensuite, l'opérateur tire la boîte vers le haut, par l'intermédiaire de l'anse (23), jusqu'à ce que la tige (31) entre en contact avec le biseau du doigt inférieur. Lorsque l'opérateur poursuit sa traction vers le haut, la tige (31) va riper sur le biseau et puisque le doigt est fixe, la tige (31) va également avoir un mouvement de translation en retrait tant que l'extrémité de la tige est sur le biseau (220). Enfin, lorsque l'extrémité de la tige (31) ne sera plus en contact avec le doigt, celle-ci va passer en dessous du doigt, grâce à la force de rappel du ressort, et par conséquent interdire l'escamotage de la boîte (20) puisque la translation vers le bas du doigt inférieur sera bloquée par la tige (31). Pour escamoter la boîte (20), il suffit à l'opérateur de manoeuvrer la serrure (26) pour libérer le doigt inférieur et rendre ainsi possible la translation vers le bas de la boîte (20). Ensuite, l'opérateur appuie sur le sommet de la boîte (20) jusqu'à ce que la tige (31) vienne se placer au-dessus du doigt (22) supérieur, de la même façon que pour le doigt inférieur.

Dans une variante de réalisation, les profilés (102) du châssis (10) comprennent des rainures (1023) faisant saillie vers l'extérieur du châssis (10). Ces rainures sont disposées sur le trajet des doigts et ont un profil complémentaire de la forme de la projection longitudinale des doigts. Ainsi, lors du mouvement de l'ensemble mobile, (2) les doigts (22) coulissent dans les rainures. Les rainures sont constituées d'un matériau rigide, de façon à renforcer la résistance mécanique des profilés (102).

Il est possible d'envisager une borne selon l'invention pouvant distribuer deux types de flux, par exemple de l'électricité et de l'eau. Pour ce faire, la boîte est scindée en deux parties. Une première partie est dédiée à la distribution de courant et est donc étanche. La deuxième partie est dédiée à la distribution d'eau.

Dans une autre variante (non représentée), l'ensemble mobile comprend des moyens de mesurer la consommation de flux distribué par la borne selon l'invention et/ou des moyens de mesure du temps d'utilisation de la borne. Ces moyens de mesure peuvent être couplés à des moyens de facturation et à des moyens de paiement, tels qu'un terminal de paiement. Ainsi, l'utilisateur de la borne selon l'invention paie la quantité de flux distribués ou la durée d'utilisation directement après utilisation.

Ainsi, la borne de branchement provisoire se caractérise en ce qu'elle comprend un ensemble mobile (2) coulissant dans des moyens (10) de guidage fixes et enterrés dans le sol (S), la borne comprend également des moyens de verrouillage autobloquants assurant le maintien de l'ensemble mobile (2), d'une part en position escamotée où la surface supérieure de l'ensemble mobile (2) affleure la surface du sol (S), et d'autre part en position déployée où l'ensemble mobile (2) fait saillie du sol (S).

Selon une autre particularité, la borne comprend des moyens (11) élastiques sollicitant l'ensemble mobile (2) pour l'amener en position déployée.

Selon une autre particularité, l'ensemble mobile (2) est constitué d'une boîte (20) surmontée d'une plaque (24) comprenant des moyens (23) de préhension escamotables dans la partie supérieure de la boîte (20).

Selon une autre particularité, la boîte (20) est étanche aux liquides et comprend, sur au moins une face (25), au moins une prise électrique (21) connectée au réseau de distribution électrique.

Selon une autre particularité, les moyens de verrouillage autobloquants comprennent, sur au moins une face (25) de l'ensemble mobile (2), au moins une paire de doigts (22) solidaires de la face et alignés sur une droite verticale et, pour chaque paire de doigts (22), un pêne (31) sollicité de façon élastique entre deux positions, une première position dite de travail dans laquelle la translation des doigts (22) est possible, et une deuxième position dite de repos, dans laquelle le pêne bloque, soit la translation du doigt (22) supérieur dans le sens de déploiement de l'ensemble mobile (2), soit la translation du doigt inférieur dans le sens d'escamotage de l'ensemble mobile (2).

Selon une autre particularité, les moyens de guidage comprennent un châssis (10) comportant des profilés (102) parallèles sur lesquels est montée une glissière (103) conformée pour recevoir l'ensemble mobile (2) et un fond (104) sur lequel sont fixées les premières extrémités (1021) des profilés (102) et les moyens (11, 12) élastiques de sollicitation.

Selon une autre particularité, le châssis (10) comprend un couvercle (105) formé d'une plaque (105) comportant un perçage (1051) sensiblement central de dimensions sensiblement identiques à la section transversale de l'ensemble mobile (2) et sur lequel sont fixées les deuxièmes extrémités (1022) des profilés (102).

Selon une autre particularité, les profilés (102) et/ou le fond (104) du châssis (10) comprennent des perçages destinés aux drainages des eaux de ruissellement susceptibles de s'introduire dans la cavité formée par le châssis (10) et/ou à alléger les moyens de guidage (10).

Selon une autre particularité, les profilés (102) comprennent des rainures rigides faisant saillie vers l'extérieur du châssis (10), ces rainures étant destinées à rigidifier le châssis (10) et à assurer le guidage des doigts (22) des moyens de verrouillage autobloquants.

Selon une autre particularité, le châssis (10) est contenu dans un caisson (13) comportant dans sa partie inférieure, au moins un perçage destiné au drainage.

Selon une autre particularité, la section transversale des doigts (22) comprend un biseau (220) situé en vis-à-vis du pêne (31) et orienté, pour le doigt supérieur, vers le fond du châssis (10) et, pour le doigt inférieur vers le couvercle (105).

Selon une autre particularité, l'ensemble mobile (2) comprend, sur au moins une face (25), au moins une prise (21) de raccordement à un réseau de distribution de fluide ou à un réseau informatique ou optique.

Selon une autre particularité, l'ensemble mobile (2) comprend des moyens de mesure de la quantité de flux utilisés par un ou plusieurs appareils connectés à l'ensemble mobile (2).

Selon une autre particularité, le matériau choisi pour réaliser les glissières (103) possède un faible coefficient de frottement.

On conçoit que la borne selon l'invention permet de mettre en place une distribution de flux tels que de l'électricité ou de l'eau de façon simple et discrète puisque, lorsque la borne est hors utilisation, elle n'est visible que par sa partie supérieure qui affleure le sol.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Borne de branchement provisoire caractérisée en ce qu'elle comprend un ensemble mobile (2) coulissant dans des moyens (10) de guidage fixes et enterrés dans le sol (S), la borne comprend également des moyens de verrouillage autobloquants assurant le maintien de l'ensemble mobile (2), d'une part en position escamotée où la surface supérieure de l'ensemble mobile (2) affleure la surface du sol (S), et d'autre part en position déployée où l'ensemble mobile (2) fait saillie du sol (S).

2. Borne de branchement provisoire selon la revendication 1, caractérisée en ce que la borne comprend des moyens (11) élastiques sollicitant l'ensemble mobile (2) pour l'amener en position déployée.

3. Borne de branchement provisoire selon la revendication 1 ou 2, caractérisée en ce que l'ensemble mobile (2) est constitué d'une boîte (20) surmontée d'une plaque (24) comprenant des moyens (23) de préhension escamotables dans la partie supérieure de la boîte (20).

4. Borne de branchement provisoire selon la revendication 3, caractérisée en ce que la boîte (20) est étanche aux liquides et comprend, sur au moins une face (25), au moins une prise électrique (21) connectée au réseau de distribution électrique.

5. Borne de branchement provisoire selon l'une des revendications 1 à 4, caractérisée en ce que les moyens de verrouillage autobloquants comprennent, sur au moins une face (25) de l'ensemble mobile (2), au moins une paire de doigts (22) solidaires de la face et alignés sur une droite verticale et, pour chaque paire de doigts (22), un pêne (31) sollicité de façon élastique entre deux positions, une première position dite de travail dans laquelle la translation des doigts (22) est possible, et une deuxième position dite de repos, dans laquelle le pêne bloque, soit la translation du doigt (22) supérieur dans le sens de déploiement de l'ensemble mobile (2), soit la translation du doigt inférieur dans le sens d'escamotage de l'ensemble mobile (2).

6. Borne de branchement provisoire selon l'une des revendications 1 à 5, caractérisée en ce que les moyens de guidage comprennent un châssis (10) comportant des profilés (102) parallèles sur lesquels est montée une glissière (103) conformée pour recevoir l'ensemble mobile (2) et un fond (104) sur lequel sont fixées les premières extrémités (1021) des profilés (102) et les moyens (11, 12) élastiques de sollicitation.

7. Borne de branchement provisoire selon la revendication 6, caractérisée en ce que le châssis (10) comprend un couvercle (105) formé d'une plaque (105) comportant un perçage (1051) sensiblement central de dimensions sensiblement identiques à la section transversale de l'ensemble mobile (2) et sur lequel sont fixées les deuxièmes extrémités (1022) des profilés (102).

8. Borne de branchement provisoire selon la revendication 6 ou 7, caractérisée en ce que les profilés (102) et/ou le fond (104) du châssis (10) comprennent des perçages destinés aux drainages des eaux de ruissellement susceptibles de s'introduire dans la cavité formée par le châssis (10) et/ou à alléger les moyens de guidage (10).

9. Borne de branchement provisoire selon l'une des revendications 6 à 8, caractérisée en ce que les profilés (102) comprennent des rainures rigides faisant saillie vers l'extérieur du châssis (10), ces rainures étant destinées à rigidifier le châssis (10) et à assurer le guidage des doigts (22) des moyens de verrouillage autobloquants.

10. Borne de branchement provisoire selon l'une des revendications 6 à 8, caractérisée en ce que le châssis (10) est contenu dans un caisson (13) comportant dans sa partie inférieure, au moins un perçage destiné au drainage.

11. Borne de branchement provisoire selon la revendication 5, caractérisée en ce que la section transversale des doigts (22) comprend un biseau (220) situé en vis-à-vis du pêne (31) et orienté, pour le doigt supérieur, vers le fond du châssis (10) et, pour le doigt inférieur vers le couvercle (105).

12. Borne de branchement provisoire selon l'une des revendications 1 à 10, caractérisée en ce que l'ensemble mobile (2) comprend, sur au moins une face (25), au moins une prise (21) de raccordement à un réseau de distribution de fluide ou à un réseau informatique ou optique.

13. Borne de branchement provisoire selon l'une des revendications 1 à 11, caractérisée en ce que l'ensemble mobile (2) comprend des moyens de mesure de la quantité de flux utilisés par un ou plusieurs appareils connectés à l'ensemble mobile (2).

14. Borne de branchement provisoire selon la revendication 6, caractérisée en ce que le matériau choisi pour réaliser les glissières (103) possède un faible coefficient de frottement.
